# FASCICULE DE BREVET EUROPEEN

(11) **EP 0 933 248 B1**
(45) Date de publication et mention de la délivrance du brevet: **23.06.2004**
(21) Numéro de dépôt: 99400173.3
(22) Date de dépôt: 26.01.1999
(51) Int. Cl.: B60N 2/48

(54) **Armature d'appui-tête, notamment pour siège de véhicule automobile**
Kopfstützenrahmen, insbesondere für Kraftfahrzeugsitze
Headrest frame, especially for motor car seats

(30) Priorité: 28.01.1998 FR 9800890
(43) Date de publication de la demande: 04.08.1999
(73) Titulaire: CENTRE D'ETUDES ET RECHERCHE POUR L'AUTOMOBILE ( CERA), F-51100 Reims (FR)
(72) Inventeur: Dauchez, Fernand, 02400 Bezu Saint Germain (FR); Dhollande, Philippe, 02100 Saint Quentin (FR); Le Gall, François, 02130 Coulonges Cohan (FR)
(74) Mandataire: Geismar, Thierry

(56) Documents cités:
- EP-A- 0 352 881
- DE-A- 4 409 557
- GB-A- 1 322 691
- US-A- 3 027 194
- US-A- 3 544 162
- US-A- 4 844 544

## Description

La présente invention concerne une armature d'appui-tête, notamment pour siège de véhicule automobile, et plus particulièrement une telle armature du type comprenant au moins une broche engagée dans le dossier dudit siège, notamment par l'intermédiaire d'une douille solidaire de la structure de ce siège.

Les appuis-tête utilisés dans l'industrie automobile comprennent de façon connue un coussin d'appui monté sur une armature qui comporte deux broches à son extrémité inférieure. L'extrémité dépassante de ces broches pénètre dans le dossier du siège. Lorsque ces appuis-tête sont réglables en hauteur, les broches sont généralement montées coulissantes dans des douilles solidaires de l'armature du siège.

Un sérieux inconvénient de ces appuis-tête réside dans le fait que, lors de chocs frontaux, ils ont tendance à monter sous l'effet de la force centrifuge induite par le basculement rapide des dossiers de siège vers l'avant. Cet effet peut aller jusqu'à l'éjection des appuis-tête, qui sont alors projetés à travers l'habitacle du véhicule.

C'est la raison pour laquelle on a proposé des dispositifs de blocage d'appui-tête munis de moyens anti-extraction comprenant un ressort en U dont les extrémités des branches sont fixées à la douille, dont les branches s'étendent vers le bas généralement dans la direction de l'axe de la broche, et dont la partie centrale est agencée pour s'engager dans une encoche de la broche lorsque cette demière atteint une certaine position en hauteur. L'encoche de la broche est telle que, lorsque la partie centrale du ressort y est engagée, elle ne peut alors en sortir par simple traction de l'appui-tête

Un tel agencement est divulgué dans le document FR-A-2 756 789 qui décrit une armature selon le préambule de la revendication 1.

Par ailleurs, la broche doit être engagée dans le dossier du siège dans l'espace libre compris entre les moyens de soutien de ce dernier et sa gamiture extérieure arrière. Or, les moyens de soutien comportent généralement dans leur partie arrière un réseau de ressorts métalliques et, pour des raisons diverses, l'encoche de la broche doit être tournée vers l'avant du véhicule, c'est-à-dire vers le réseau de ressorts.

Le problème est que la position du réseau de ressorts est relativement imprécise dans la direction avant/arrière du véhicule. Elle dépend en effet du poids du passager, de sa façon de se tenir sur le siège, et des accélérations auxquelles est soumis le véhicule.

Il en résulte des possibilités d'accrochage de l'encoche de la broche dans le réseau de ressorts du dossier du siège. Dans ce cas, l'appui-tête est coincé.

La présente invention vise notamment à pallier ces inconvénients.

A cet effet, l'invention a pour objet une armature d'appui-tête, selon la revendication 1.

En d'autres termes, l'encoche comporte un pont de matière dans sa partie centrale, et la partie centrale du ressort forme un renfoncement central dans lequel s'engage le pont de matière lorsque la partie centrale du ressort s'engage dans l'encoche.

Par conséquent, la broche présente une surface lisse en vis-à-vis du réseau de ressorts et ne peut donc plus s'y accrocher.

On sait par ailleurs que ces armatures d'appui-tête présentent généralement une forme en U, avec deux broches latérales verticales réunies par une partie médiane horizontale. Le problème est de fixer par des moyens aussi simples que possible le coussin d'appui sur cette partie médiane, tout en permettant un réglage de l'indinaison de ce coussin.

Egalement selon un mode de réalisation de l'invention, cette partie médiane est cylindrique à section circulaire, et on prévoit une pince montée à friction pour pivoter sur cette partie médiane, ladite pince étant munie de moyens de fixation pour le coussin d'appui.

Ainsi, l'inclinaison du coussin peut être réglée de façon continue, et aucun système de crans n'est nécessaire.

De préférence, la pince possède un orifice dans sa partie enserrant l'armature, cette dernière possédant une saillie engagée dans ledit orifice.

Le coussin d'appui-tête est donc bloqué latéralement, et son débattement angulaire est limité.

On décrira maintenant, à titre d'exemple non limitatif, un mode de réalisation particulier de l'invention, en référence aux dessins schématiques en perspective annexés dans lesquels:
- la figure 1 est une vue d'ensemble d'une armature d'appui-tête selon la présente invention;
- les figures 2a et 2b sont des vues de l'extrémité inférieure d'une broche, respectivement sans et avec le ressort de blocage;

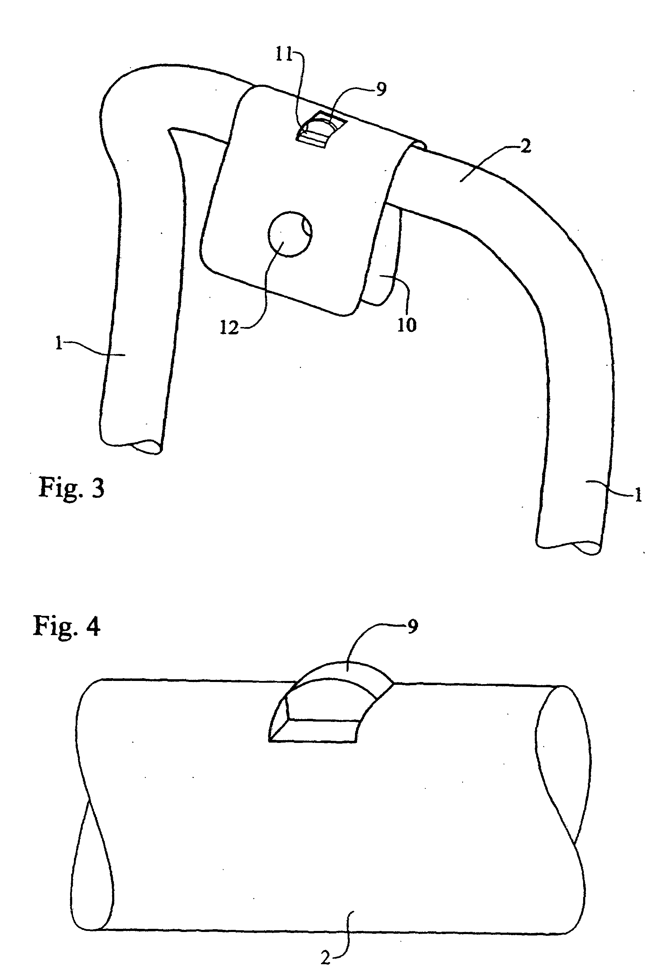

- la figure 3 représente la partie supérieure de l'armature sur laquelle est montée la pince de fixation du coussin d'appui; et
- la figure 4 est une vue à plus grande échelle de la zone centrale de cette partie supérieure.

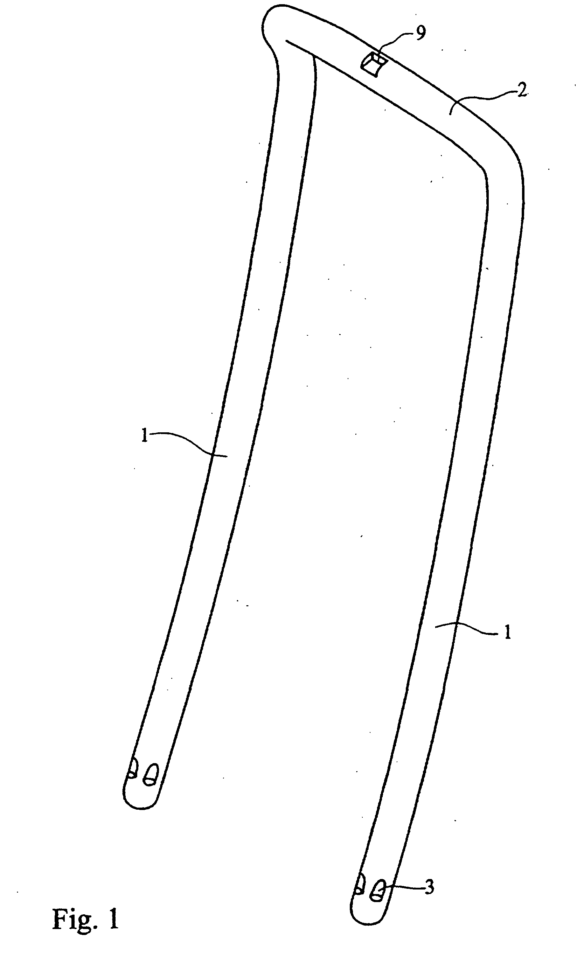

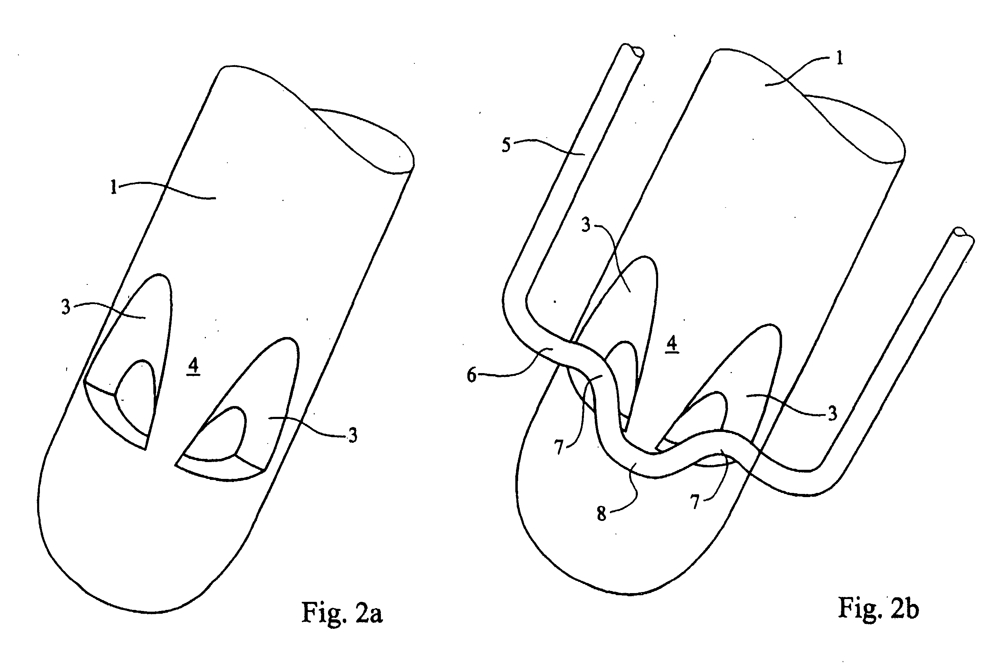

On voit à la figure 1 une armature d'appui-tête réalisée de façon connue en tube métallique à section circulaire. Cette armature est en forme de U avec deux broches latérales 1 destinées à être engagées verticalement dans le dossier d'un siège de véhicule automobile, réunis par une partie médiane 2. Comme montré aux figure 2, l'extrémité libre des broches 1 est emboutie de manière à présenter une forme arrondie.

Les figures montrent l'armature vue de l'avant du véhicule lorsqu'elle est montée. Du côté avant, chaque broche comporte à son extrémité inférieure deux demi encoches 3 séparées par un pont de matière 4. Les demi encoches 3 sont symétriques par rapport au plan de symétrie de la broche parallèle au plan de symétrie de l'armature.

La figure 2b montre par ailleurs un ressort de blocage 5 en U. Ce ressort 5 est monté de toute manière convenable solidaire de la stucture du dossier du siège, par exemple fixé par ses extrémités à une douille de guidage traversée par la broche.

La partie centrale 6 du ressort 5 forme deux saillies latérales 7 en direction de la broche 1, réunies par un renfoncement 8 dans la direction opposée. Ainsi, lorsque la broche 1 est tirée vers le haut et arrive dans la position montrée à la figure 2b par rapport au ressort 5, les saillies 7 s'engagent dans les encoches 3, bloquant tout mouvement ultérieur de la broche vers le haut. On constate que le pont de matière 4 s'engage dans le renfoncement 8 lorsque les saillies 7 s'engagent dans les encoches 3.

Grâce au pont de matière 4, l'appui-tête peut coulisser verticalement sans que l'encoche risque d'accrocher un organe intérieur au dossier du siège, par exemple un ressort de soutien.

La partie médiane 2 de l'armature présente en son centre une saillie 9 réalisée par exemple par pincement.

Une pince élastique 10 est engagée à friction sur la partie médiane 2 de l'armature. La pince 10 comporte un orifice 11 dans lequel est engagée la saillie 9 lorsque la pince 10 est montée sur l'armature. La saillie 9 bloque donc la pince 10 latéralement et limite son débattement angulaire.

La pince 10 comporte enfin des trous 12 permettant le montage du coussin de l'appui-tête.

## Revendications

1. Armature d'appui-tête, notamment pour siège de véhicule automobile, du type comprenant au moins une broche (1) engagée dans le dossier dudit siège, ladite broche comportant une encoche (3) sur son côté avant agencée pour coopérer avec la partie active (6) d'un ressort monté sur la structure dudit siège, ladite partie active étant agencée pour s'engager dans ladite encoche (3) de la broche lorsque cette dernière atteint une certaine position en hauteur, **caractérisé par le fait que** ladite encoche (3) est réalisée en deux parties de part et d'autre d'un plan de symétrie de la broche sensiblement parallèle au plan de symétrie de l'appui-tête, lesdites deux parties étant séparées par un pont de matière, ladite partie centrale du ressort formant deux saillies (7) correspondantes en direction desdites parties de l'encoche (3).

2. Armature d'appui-tête selon la revendication 1, comprenant deux broches latérales (1) réunies par une partie médiane (2), cette partie médiane étant cylindrique à section circulaire, et une pince (10) étant montée à friction pour pivoter sur cette partie médiane, ladite pince étant munie de moyens de fixation (12) pour le coussin d'appui.

3. Armature d'appui-tête selon la revendication 2, dans lequel la pince (10) possède un orifice (11) dans sa partie enserrant l'armature, cette demière possédant une saillie (9) engagée dans ledit orifice.

## Patentansprüche

1. Kopfstützenarmatur, insbesondere für einen Kraftfahrzeugsitz, mit mindestens einer in die Rückenlehne des besagten Sitzes eingeführten Spindel (1), wobei die besagte Spindel an ihrer Vorderseite eine Kerbe (3) aufweist, die vorgesehen ist, um mit dem aktiven Teil (6) einer auf die Struktur des besagten Sitzes montierten Feder zusammenzuwirken, wobei der besagte aktive Teil vorgesehen ist, um in die besagte Kerbe (3) der Spindel eingeführt zu werden, wenn diese eine bestimmte Höhenstellung erreicht hat, **dadurch gekennzeichnet, dass** die besagte Kerbe (3) aus zwei Teilen auf beiden Seiten einer etwa parallel zur Symmetrieebene der Kopfstütze verlaufenden Symmetrieebene der Spindel realisiert ist, wobei die besagten beiden Teile durch eine Materialbrücke getrennt sind, wobei das besagte mittlere Teil der Feder zwei entsprechende Vorsprünge in Richtung der besagten Teile der Kerbe (3) bildet.

2. Kopfstützenarmatur nach Anspruch 1, mit zwei durch einen mittleren Teil (2) verbundenen seitlichen Spindeln (1), wobei dieser mittlere Teil zylindrisch mit kreisrundem Querschnitt ist, und wobei eine Klemme (10) reibend montiert ist, um auf diesem mittleren Teil auszuschwenken, wobei die besagte Klemme mit Befestigungsmitteln (12) für das Stützkissen ausgestattet ist.

3. Kopfstützenarmatur nach Anspruch 2, bei der die Klemme (10) eine Öffnung (1) in ihrem die Armatur umschließenden Teil umfasst, wobei letzterer einen in die besagte Öffnung eingeführten Vorsprung (9) aufweist.

## Claims

1. A head-rest frame, in particular for a car seat, of the type comprising at least one spindle (1) engaged in the back rest of the said seat, the said spindle comprising a recess (3) on its front side engaged so as to cooperate with the active part (6) of a spring mounted on the structure of the said seat, the said active part being arranged so as to engage in the said recess (3) in the spindle when the latter reaches a certain position in height, **characterised by** the fact that the said recess (3) is produced in two parts on each side of a plane of symmetry of the spindle substantially parallel to the plane of symmetry of the head rest, the said two parts being separated by a bridge of material, the said central part of the spring forming two corresponding projections (7) in the direction of the said parts of the recess (3).

2. A head-rest frame according to Claim 1, comprising two lateral spindles (1) joined by a middle part (2), this middle part being cylindrical with a circular cross-section, and a clamp (10) being mounted with friction in order to pivot on this middle part, the said clamp being provided with fixing means (12) for the support cushion.

3. A head-rest frame according to Claim 2, in which the clamp (10) has an orifice (11) in its part surrounding the frame, the latter having a projection (9) engaged in the said orifice.
